# EUROPÄISCHE PATENTSCHRIFT

(11) **EP 0 900 716 B1**
(45) Veröffentlichungstag und Bekanntmachung des Hinweises auf die Patenterteilung: **29.01.2003**
(21) Anmeldenummer: 98116349.6
(22) Anmeldetag: 28.08.1998
(51) Int. Cl.: B62D 29/00, B62D 25/04, B62D 33/03, B62D 25/08

(54) **Tragstruktur eines Kraftfahrzeugs**
Supporting structure for a motor vehicle
Structure de support pour véhicule automobile

(30) Priorität: 27.02.1998 DE 19808392; 06.09.1997 DE 19739095
(43) Veröffentlichungstag der Anmeldung: 10.03.1999
(73) Patentinhaber: Volkswagen Aktiengesellschaft, 38436 Wolfsburg (DE)
(72) Erfinder: Bauer, Andreas, 38442 Wolfsburg (DE); Dau, Wolfram, 38444 Wolfsburg (DE); Lange, Wolfgang, 38448 Wolfsburg (DE)

(56) Entgegenhaltungen:
- EP-A- 0 494 562
- DE-A- 4 322 717
- DE-A- 19 724 624
- PATENT ABSTRACTS OF JAPAN vol. 011, no. 114 (M-579), 10. April 1987 & JP 61 257371 A (SUZUKI MOTOR CO LTD), 14. November 1986

## Beschreibung

Die Erfindung betrifft eine Tragstruktur eines Kraftfahrzeugs aus Leichtmetall nach dem Oberbegriff des Anspruchs 1.
Aus der für den Oberbegriff des Anspruchs 1 gattungsbildenden DE 43 22 717 A1 ist ein Rahmen für Kraftfahrzeuge, auch als Tragstruktur bezeichnet, bekannt, der seinerseits wenigstens vier großvolumige, einstückige Basisknotenelemente aus Leichtmetall oder Kunststoff beinhaltet, wobei jeweils zwei seitlich gegenüberliegend im Vorderwagen- und Hinterwagenbereich angeordnet und über angeformte Anschlußteile mit Quer- und Längsträgern, ebenfalls aus Leichtmetall oder Kunststoff hergestellt, zu einem Grundrahmen zusammengesteckt und verbunden sind.

Eine weitere bekannte Tragstruktur eines Kraftfahrzeugs in der Art eines Gitterrahmens (EP 0 146 716 B1) besteht aus Leichtmetall-Gußknoten und diese verbindende Leichtmetall-Strangprofile. Dabei sind viele verschiedene Leichtmetall-Gußknoten mit vielen kleineren und größeren Leichtmetall-Strangprofilen verbunden. Daraus ergibt sich ein relativ großer Herstellungs- und Montageaufwand mit komplexen Schweißmaßnahmen und daraus resultierenden, relativ großen Maßtoleranzen.
Die Leichtmetall-Gußknoten werden hierbei in an sich bekannter Weise in einem Hochdruckgießverfahren, einem sog. Vacualverfahren gegossen. Bei diesem Gießverfahren treten sehr hohe Drücke auf, die mit großen hydraulischen Zylindern beherrscht werden, wodurch aber die Druckgießmaschinen und damit auch die herstellbaren Leichtmetall-Gußknoten in ihren Abmessungen begrenzt sind. Die Herstellbarkeit der Leichtmetall-Gußknoten hat somit einen maßgebenden Einfluß auf die Konstruktionsmöglichkeiten, die Qualität, das Gewicht und den Preis der bekannten Tragstruktur eines Kraftfahrzeugs aus Leichtmetall.
Aus der DE 44 23 642 C1 ist bekannt, einen Tragrahmen in Fachwerkbauweise (integrale Gitterrahmen-Struktur) aus Rahmenprofilteilen einerseits und Faserverbund-Knotenstellen andererseits aufzubauen. Die Faserverbund-Knotenstellen können entweder eine thermoplastische oder eine duroplastische Matrix enthalten. Die Rahmenprofilteile sind bevorzugt als Rechteck-Hohlprofile ausgebildet, und zwar entweder aus einem Faserverbundwerkstoff mit einer thermoplastischen Matrix oder aus einem Faserverbundwerkstoff mit einer Duromermatrix oder auch aus einem Faserverbundwerkstoff mit einer Duromermatrix oder auch aus einem metallischen Werkstoff.
Des Weiteren ist aus der EP 0 494 562 A1 eine Vorderteilstruktur aus Kunststoff bekannt, die ihrerseits aus einem Bodenteil und einem Aufbau aus einer Trennwand und zwei Seitenteilen besteht, wobei der Aufbau der Trennwand orthogonale Stützbereiche trägt, um die Längs- und Queraufnahme des Seitenteils zu gewährleisten und letzteres Stützrippen für die seitliche Umlenkwand der Trennwand sowie eine Stützfläche besitzt, um zugleich die Verbindung mit dem Bodenteil und mit dem Aufbau der Trennwand zu gewährleisten.
Es ist ebenfalls bereits bekannt, im Vorbau eines Wagenkastens für einen Personenkraftwagen beidseitig eine einstückige, stabile Radlaufschale einzusetzen (DE 195 43 193 C1), wobei teilweise Versteifungsabschnitte in der Radlaufschale integriert sind. Solche einstückigen, stabilen Radlaufschalen werden hier nur im Vorbau des Wagenkastens in Verbindung mit einer üblichen Stahlblechkarosserie verwendet. Es ist zudem ohne Angabe weiterer Einzelheiten erwähnt, dass solche Radlaufschalen auch aus Leichtmetall mit Aufnahmen zur Halterung und Befestigung von Funktionselementen herstellbar sind. Eine solche Radlaufschale aus Leichtmetall stellt somit hier lediglich ein Karosserieteil im Vorbau einer Karosserie dar, der in einer Verbundbauweise ansonsten in einer herkömmlichen Stahlblechkonstruktion aufgebaut ist.
Bei einem bekannten Niederdruckgießverfahren für Leichtmetallräder (DE 94 21 365 U1) wird der Erstarrungsvorgang ausgehend von gegenüber der Zulaufstelle für die Schmelze entfernten Stellen gesteuert geführt. Dazu wird zur Erzielung einer selektiven Kühlung mit vorbestimmter Abkühlrate Druckluft durch Kühlkanäle einer entsprechenden Gießform geführt. Damit sind in Verbindung mit einem wenig aufwendigen Niederdruckverfahren relativ dünne Wandstärken aus Gründen einer Gewichtsersparnis erreichbar. Zudem wird eine homogene und lunkerfreie Gefügestruktur des Gußkörpers erreicht.
Weiter ist ein Gießverfahren für dünnwandige Gußteile aus Eisenwerkstoffen bekannt (DE 42 38 753 A1), bei dem eine Gießform bis kurz unter die Erstarrungstemperatur der Schmelze vorgeheizt wird und nach dem Einbringen der Schmelze eine gesteuerte Temperaturführung zur Abkühlung erfolgt.
Weiter sind Druck- und/oder Niederdruckgießverfahren und entsprechende Gießformen bekannt (DE 42 25 879 A1; DE 43 13 836 A1) mit Anordnungen von Temperaturfühlern und/oder Druckfühlern, wobei ebenfalls der Gießablauf hinsichtlich des Druck- und/oder Temperaturverlaufs gesteuert geführt wird.

Ausgehend von der gattungsbildenden Tragstruktur nach DE 43 22 717 A1 ist es Aufgabe der Erfindung, die Tragstruktur eines Kraftfahrzeugs so weiterzubilden, daß diese bei Verbesserung der statischen und dynamischen Eigenschaften gewichtsgünstig aufgebaut und mit wenig Aufwand herstellbar und montierbar ist.
Diese Aufgabe wird mit den Merkmalen des Anspruch 1 gelöst.

Gemäß Anspruch 1 sind als Leichtmetall-Gußknoten wenigstens vier großvolumige, einstückige Basisknotenelemente vorgesehen, von denen jeweils zwei seitlich gegenüberliegend im Bereich des Vorderwagens und jeweils zwei seitlich gegenüberliegend im Bereich des Hinterwagens angeordnet sind. Diese vier Basisknotenelemente sind über angeformte Anschlußteile mit Leichtmetall-Strangprofilen und/oder Kunststoffprofilen als Verbindungsträger zu einem Grundrahmen zusammengesteckt und verbunden. Erfindungsgemäß weisen die Vorderwagen-Basisknotenelemente jeweils ein integriertes unteres Längsträgerstück, einen Federbeindom und Haltepunkte für die Vorderachse sowie jeweils eine integrierte gebogene Trägerverbindung vom unteren Längsträgerstück zu einem angeformten Schwelleranschluß auf.

Mit dieser Konstruktion kann einfach und schnell mit wenigen Bauteilen ein maßhaltiger Grundrahmen aufgebaut werden, der dann mit den weiteren Karosseriebauteilen und Funktionselementen bestückt und ergänzt werden kann. Durch die Einsparung einer Mehrzahl von Leichtmetallgußknoten im Bereich der großvolumigen, einstückigen Basisknotenelemente ist die Gesamtanordnung gewichtsgünstiger.
Dadurch sind leichte, preiswerte und umweltfreundliche Personenkraftwagen mit geringem Kraftstoffverbrauch herstellbar.
Die Tragstruktur weist verbesserte statische und dynamische Eigenschaften auf, da diese infolge der gebogenen Trägerverbindungen besonders geeignet ist, Schub- und Zugkräfte, resultierend beispielsweise aus einem Crash oder aus Anfahr- und Beschleunigungsvorgängen des Fahrzeugs, von einer höheren Ebene, nämlich der Ebene des unteren Längsträgerstücks in die Ebene der Bodenstruktur, nämlich der Ebene des Schwelleranschlusses zu übertragen.

Besonders vorteilhaft können in solche einstückige Basisknotenelemente Trägerteile und/ oder Wandteile und/oder Verstärkungsrippen sowie Anschlußteile für Verbindungsträger und/oder Funktionsteile integriert werden.

Wie oben bereits erwähnt, sind vorteilhaft in den Vorderwagen-Basisknotenelementen jeweils ein unteres Längsträgerstück, ein Federbeindom und Haltepunkte für die Vorderachse integriert, wodurch deren separate Ausbildung aus einer Mehrzahl von Einzelbauteilen entfällt.

Ebenso können die Vorderwagen-Basisknotenelemente jeweils einen integrierten Vertikalträger, bevorzugt anschließend an dem Bereich des Schwelleranschlußteils, mit einem oberen A-Säulenanschlußteil aufweisen. An diesem kann vorteilhaft ein integriertes, oberes Längsträgerstück anschließen, an dem beispielsweise in einem etwa horizontalen, U-förmigen Bereich ein Federbeindom ausgebildet ist. Weitere Anschlußteile und Halterungen für Träger und Funktionselemente, insbesondere seitlich zur Befestigung von Querträgerprofilen im Tunnel- und Windlaufbereich und zur Befestigung von Getriebelagern und/oder Antiblockiergeräten und/oder Motorlagern sind möglich und je nach der konkreten Tragwerkkonstruktion vorteilhaft einsetzbar. Die Querträgerprofile können in einer einfachen Gesamtanordnung ähnlich wie ein Hilfsrahmen Lenkgetriebe, Pendelstützen oder Aggregate für eine Servolenkung tragen.

Die Hinterwagen-Basisknotenelemente sind vorteilhaft entsprechend den Vorderwagen-Basisknotenelementen aufgebaut, wobei die Hinterwagen-Basisknotenelemente jeweils ein integriertes unteres Längsträgerstück, einen Federbeindom und Haltepunkte für die Hinterachse aufweisen. Weiter sind auch hier Vertikalträgerteile, Schwelleranschlußteile, Radhausanschlußteile und insbesondere C-Säulenanschlußteile integrierbar.

Sowohl die Vorderwagen-Basisknotenelemente als auch die Hinterwagen-Basisknotenelemente weisen vorteilhaft integrierte, dünnwandige Wandbereiche wenigstens als partielle Radhauswandbereiche auf. Dadurch wird eine gewichtsgünstige, stabile Aussteifung der Basisknotenelemente bei wenig Gewicht erreicht mit der Funktion einer einstückigen, stabilen Radlaufschale.

Die Wandbereiche der Basisknotenelemente an Trägerteilen, Wandteilen, Verstärkungsrippen und Anschlußteilen sollen möglichst dünnwandig mit Wandstärken von bevorzugt ca. 2 mm hergestellt sein. Diese dünnen Wandstärken sind einerseits bei geeigneter Anordnung der integrierten Elemente für die erforderliche Stabilität ausreichend und führen andererseits zu günstigen, geringen Gewichten.

Solche dünnwandigen Leichtmetallguß-Basisknotenelemente werden vorteilhaft durch ein einfach handhabbares Niederdruckgießverfahren hergestellt. Dabei wird in einer bis angenähert an die Schmelztemperatur des Leichtmetalls aufgeheizten Gießform das Erstarren der Schmelze durch gesteuertes Abkühlen zeitlich verzögert, dergestalt, daß Erstarrungsfronten von am weitest voneinander entfernt liegenden Gußkörperenden langsam zur Gußkörpermitte hin wandern.

Gießformen mit Heiz- und Kühlelementen sowie dafür erforderliche Sensoren und Steuerungen sind an sich bekannt.

Die erfindungsgemäße Tragstruktur eines Kraftfahrzeugs kann auch unter Verwendung von Kunststoffknoten und/oder Kunststoffprofilen aufgebaut werden. Aus ökonomischen und ökologischen Gründen werden für die Kunststoffknoten als Basisknotenelemente bevorzugt thermoplastische Kunststoffmaterialien verwendet, es kommen aber auch duroplastische Kunststoffe in Frage. Zur Erzielung einer höheren Festigkeit und Steifigkeit können Faserverbundwerkstoffe verwendet werden. Die Kunststoffknoten werden bevorzugt im kostengünstigen Spritzgießverfahren hergestellt, wobei zur Erzielung der oftmals benötigten komplizierten Formgebung Spritzgießformen mit beweglichen Schiebern zum Einsatz kommen können. Auch die Kunststoffknoten werden bevorzugt (aufgrund der größeren Steifigkeit und Festigkeit von Metallwerkstoffen gegenüber Kunststoffwerkstoffen) mit Leichtmetall-Strangprofilen kombiniert; grundsätzlich können aber auch (insbesondere in Bereichen mit geringerer mechanischer Beanspruchung) Kunststoffprofile verwendet werden.

Die erfindungsgemäße Kraftfahrzeug-Tragstruktur wird bevorzugt mit einer Außenhautbeplankung aus Metallblechen, insbesondere Leichtmetallblechen, versehen, da Metallbleche eine größere Steifigkeit, Festigkeit und UV-Ucht-Beständigkeit als Kunststofftafeln aufweisen. Grundsätzlich ist es aber insbesondere in Bereichen mit geringerer mechanischer Beanspruchung und/oder in sonnenlichtgeschützten Bereichen auch möglich, eine Beplankung aus Kunststofftafeln zu verwenden.

Anhand einer Zeichnung wird die Erfindung näher erläutert.

Es zeigen:
Fig. 1 eine Seitenansicht eines linken Vorderwagen-Basisknotenelements,
Fig. 2 eine Ansicht des Basisknotenelements nach Fig. 1 in Fahrzeuglängsrichtung, und
Fig. 3 eine Draufsicht auf das Vorderwagen-Basisknotenelement nach den Fig. 1 und 2.

Eine hier nicht dargestellte Tragstruktur für ein Kraftfahrzeugs weist vier großvolumige, einstückige Basisknotenelemente 1 als Leichtmetall-Gußknoten (aus Aluminium und/oder Magnesium und/oder deren Legierungen) auf, von denen jeweils zwei seitlich gegenüberliegend im Bereich des Vorderwagens und jeweils zwei seitlich gegenüberliegend im Bereich des Hinterwagens angeordnet sind. Diese vier Basisknotenelemente 1 sind jeweils über angeformte Anschlußteile mit Leichtmetall-Strangprofilen zu einem hier ebenfalls nicht dargestellten Grundrahmen zusammengesteckt und verbunden.

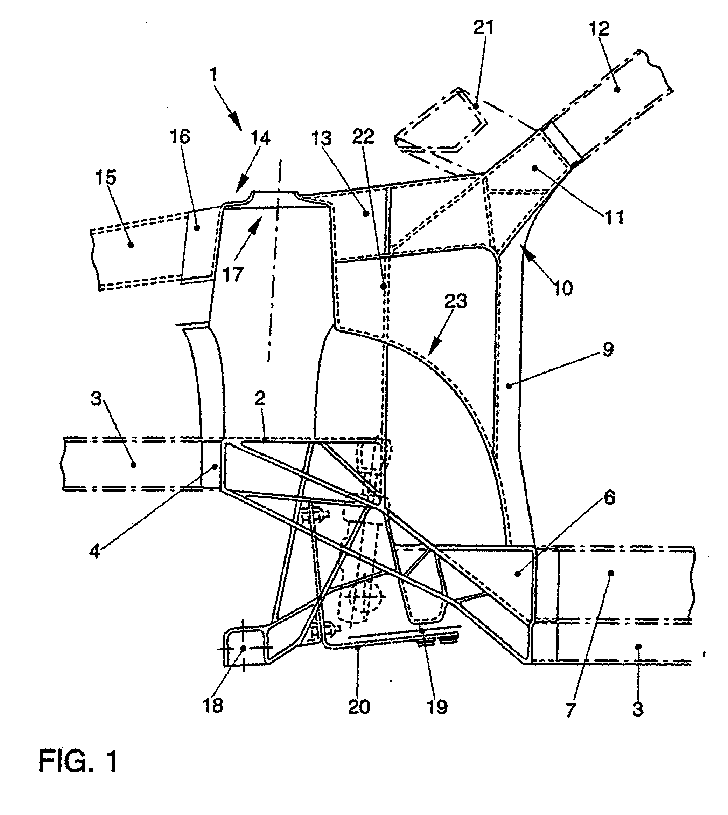

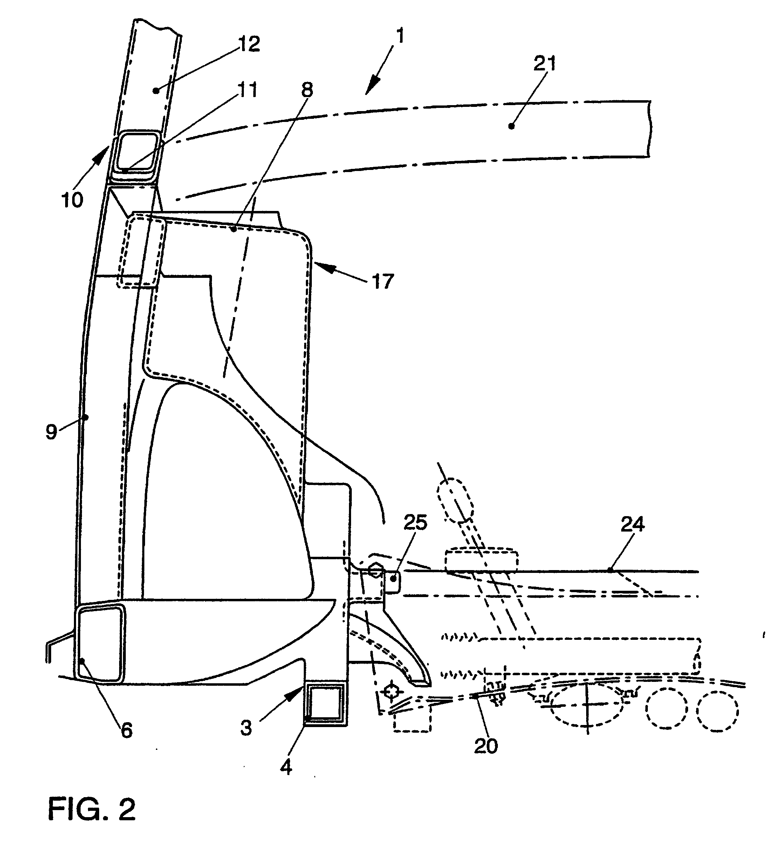

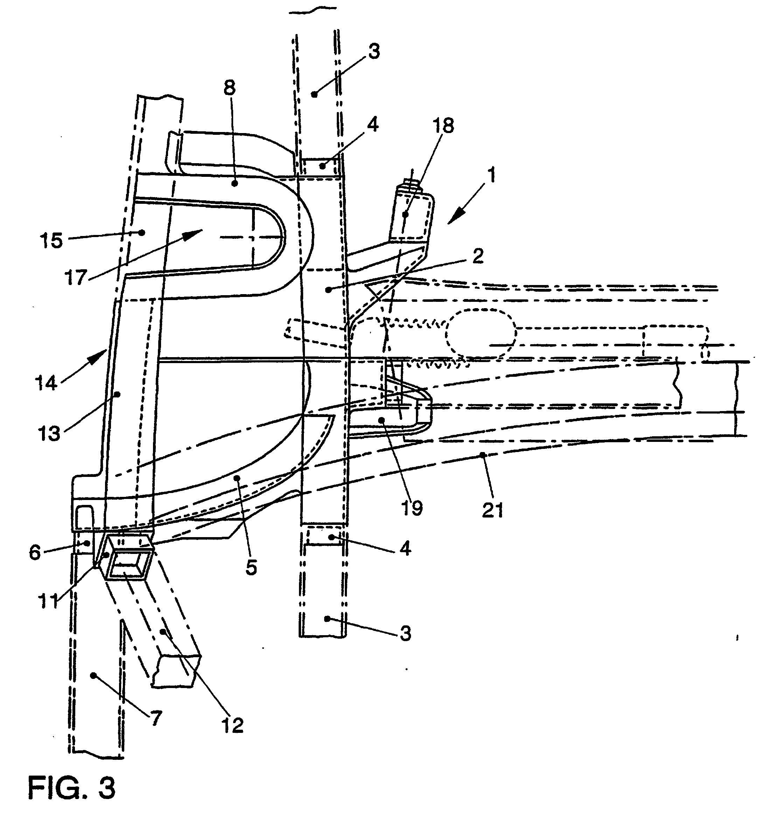

In den Fig. 1 bis 3 ist beispielhaft ein linkes Vorderwagen-Basisknotenelement 1 dargestellt, wobei Fig. 1 eine Seitenansicht, Fig. 2 eine Ansicht in Fahrzeuglängsrichtung und Fig. 3 eine Draufsicht des Vorderwagen-Basisknotenelements 1 zeigt.

Dieses Vorderwagen-Basisknotenelement 1 umfaßt, wie dies insbesondere aus der Fig. 3 ersichtlich ist, ein integriertes, unteres Längsträgerstück 2, das jeweils an seinen freien Enden ein Anschlußteil 4 zum Anschluß der unteren Längsträger 3 als Leichtmetall-Strangprofil aufweist. Diese Anschlußteile 4 sind dabei so ausgebildet, daß sie in die endseitigen Anschlußöffnungen der unteren Längsträger 3 formschlüssig einsteckbar sind.

Weiter ist, wie dies ebenfalls aus der Fig. 3 ersichtlich ist, im Vorderwagen-Basisknotenelement 1 eine gebogene Trägerverbindung 5 integriert, die sich vom unteren Längsträgerstück 2 zu einem angeformten Schwelleranschluß 6 erstreckt. An diesen Schwelleranschluß 6 ist, wie auch aus Fig. 1 ersichtlich ist, ein Schweller 7 angeschlossen.

Ferner ist in dem Vorderwagen-Basisknotenelement 1 ein Vertikalträger 9 integriert. Wie dies insbesondere aus der Fig. 2 entnehmbar ist, erstreckt sich dieser Vertikalträger 9 vom Bereich des Anschlußschwellers 6 ausgehend vertikal nach oben. An einem oberen Vertikalträgerende 10 ist, wie dies aus der Fig. 1 ersichtlich ist, ein integrales A-Säulenanschlußteil 11 ausgebildet. An dieses A-Säulenanschlußteil 11 ist eine zum Dach hin verlaufende A-Säule 12 angeschlossen.

Wie dies insbesondere aus den Fig. 1 und 3 ersichtlich ist, schließt sich im Bereich des A-Säulenanschlußteils 11 ein ebenfalls in das Vorderwagen-Basisknotenelement 1 integriertes, oberes Längsträgerstück 13 an. An einem freien Längsträgerstückende 14 des oberen Längsträgerstücks 13 ist ein oberer Längsträger 15 an ein Anschlußteil 16 angeschlossen.

Zur Bildung eines Federbeindoms 17 weist das obere Längsträgerstück 13 im Bereich des freien Längsträgerstückendes 14 ein horizontal liegendes, U-förmiges Teilstück 8 auf.

Außerdem sind an dem Vorderwagen-Basisknotenelement 1 Haltepunkte 18, 19 für die Vorderachse integriert. Im Bereich dieser achsseitigen Haltepunkte 18, 19 ist, wie dies in der Fig. 1 strichliert eingezeichnet ist, ein Querträger 20 als Hilfsrahmen angeschraubt. Dieser Querträger 20, der als winkelförmiges Profil ausgebildet ist, bewirkt eine zusätzliche Versteifung der Karosserie und kann Lenkgetriebe, Pendelstütze und ein elektrisches und/oder hydraulisches Aggregat für die Servolenkung tragen. Ebenso können an dem Vorderwagen-Basisknotenelement 1 Halterungen und Anschlußteile für Getriebelager, Antiblockiergeräte und Motorlager vorgesehen sein.

Wie den Fig. 1 und 3 bzw. 2 zu entnehmen ist, sind zusätzlich zu dem Querträger 20 ein Windlauf-Querträger 21 im Bereich des A-Säulenanschlußteils 11 sowie ein Tunnel-Querträger 24 an ein Anschlußteil 25 im Bereich der Haltepunkte 18, 19 angeschlossen. Weiterhin kann im Bereich der achsseitigen Haltepunkte 18, 19 noch ein weiteres, hier nicht dargestelltes winkelförmiges Querträgerprofil befestigt werden, das ähnlich dem Querträger 20 die Karosserie zusätzlich versteift und Funktionselemente tragen kann.

Das Vorderwagen-Basisknotenelement 1 ist zur Gewichtsreduzierung in wesentlichen Bereichen dünnwandig ausgebildet, z.B. mit einer Wandstärke von 2 mm. Zur Versteifung des Aufbaus sind daher am Vorderwagen-Basisknotenelement 1 Verstärkungsrippen 22 ausgebildet, wie dies aus Fig. 1 ersichtlich ist.

Ferner weist das Vorderwagen-Basisknotenelement 1 integrierte, dünnwandige Wandbereiche 23 auf, die partiell Radhauswandbereiche ausbilden.
Die hier nicht dargestellten Hinterwagen-Basisknotenelemente sowie das rechte Vorderwagen-Basisknotenelement weisen einen grundsätzlich gleichen Aufbau auf.

Zur Herstellung der Basisknotenelemente eines Kraftfahrzeugs mit geringen Wanddicken und hoher Duktilität wird ein Niederdruckgießverfahren verwendet. Dabei wird in einer bis angenähert an die Schmelztemperatur des Leichtmetalls aufgeheizten Gießform das Erstarren der Schmelze durch gesteuertes Abkühlen zeitlich verzögert. Dadurch wandern die Erstarrungsfronten von am weitestens voneinander entfernt liegenden Gußkörperenden langsam zur Gußkörpermitte hin.

Als Leichtmetall wird bevorzugt Aluminium verwendet, das in die z.B. mittels einer Induktionsspule aufgeheizte Gießform eingefüllt wird. Nach diesem Einfüllen der Aluminium-Schmelze und dem anschließenden gesteuerten Abkühlen beginnt allmählich die Erstarrung im Bereich der Gußkörperenden, während die Aluminium-Schmelze in der Gußkörpermitte noch flüssig bleibt. Dadurch werden Lunkerbildungen vermieden, weil die Schmelze von der Gußkörpermitte her in die Erstarrungszonen nachfließen kann. Zudem können mit der zeitlich gesteuerten Abkühlung auch Wärmespannungen im Gußkörper abgebaut werden, was eine hohe Duktilität der Basisknotenelemente zur Folge hat.

## Patentansprüche

1. Tragstruktur eines Kraftfahrzeugs, bestehend aus Leichtmetall-Gußknoten und/oder Kunststoffknoten (1) und diese verbindenden Leichtmetall-Strangprofilen und/oder Kunststoffprofilen, (3, 7, 12, 15, 21) wobei als Leichtmetall-Gußknoten und/oder Kunststoffknoten wenigstens vier großvolumige, einstückige Basisknotenelemente (1) vorgesehen sind, von denen jeweils zwei seitlich gegenüberliegend im Bereich des Vorderwagens und jeweils zwei seitlich gegenüberliegend im Bereich des Hinterwagens angeordnet sind und wobei die vier Basisknotenelemente (1) über angeformte Anschlußteile (4, 6, 11, 16) mit Leichtmetall-Strangprofilen und/oder Kunststoffprofilen (3, 7, 12, 15, 21) als Verbindungsträger zu einem Grundrahmen zusammengesteckt und verbunden sind,
**dadurch gekennzeichnet, daß**
die Vorderwagen-Basisknotenelemente (1) jeweils ein integriertes unteres Längsträgerstück (2), einen Federbeindom (17) und Haltepunkte (18, 19) für die Vorderachse sowie jeweils eine integrierte gebogene Trägerverbindung (5) vom unteren Längsträgerstück (2) zu einem angeformten Schwelleranschluß (6) aufweisen.

2. Tragstruktur nach Anspruch 1
**dadurch gekennzeichnet, daß**
die jeweils einstückigen Basisknotenelemente (1) integriert Trägerteile (2, 5, 9, 13) und/oder Wandteile (23) und/oder Verstärkungsrippen (22) und Anschlußteile (4, 6, 11, 16) für Verbindungsträger (3, 7, 12, 15) und/oder Funktionsteile aufweisen.

3. Tragstruktur nach Anspruch 1 oder Anspruch 2,
**dadurch gekennzeichnet, daß**
die Basisknotenetemente (1) wenigstens in wesentlichen Bereichen dünnwandig ausgebildet sind.

4. Tragstruktur nach einem der Ansprüche 1 bis 3,
**dadurch gekennzeichnet, daß**
die Vorderwagen-Basisknotenelemente (1) jeweils einen integrierten Vertikalträger (9), bevorzugt anschließend an den Bereich des Schwelleranschlußteils (6), mit einem oberen A-Säulenanschlußteil (11) aufweisen, wo zudem ein integriertes oberes Längsträgerstück (13) anschließt, das zur Bildung eines Federbeindoms (17) ggf. ein etwa horizontal liegendes U-förmiges Teilstück (8) enthalten kann.

5. Tragstruktur nach einem der Ansprüche 1 bis 4,
**dadurch gekennzeichnet, daß**
zudem Anschlußteile und Halterungen für Träger und Funktionselemente angeformt sind, insbesondere seitlich zur Befestigung von Querträgerprofilen (20, 21, 24) im Tunnel- und Windlaufbereich, die ggf. ähnlich wie ein Hilfsrahmen Lenkgetriebe, Pendelstütze und Aggregate für Servolenkung tragen können, und zur Befestigung von Getriebelagern und/oder Antiblockiergeräten und/oder Motorlagern.

6. Tragstruktur nach einem der Ansprüche 1 bis 5,
**dadurch gekennzeichnet, daß**
die Hinterwagen-Basisknotenelemente jeweils ein integriertes unteres Längsträgerstück, einen Federbeindom und Haltepunkte für die Hinterachse aufweisen.

7. Tragstruktur nach Anspruch 6,
**dadurch gekennzeichnet, daß**
die Hinterwagen-Basisknotenelemente jeweils wenigstens ein Schwelleranschlußteil, ein C-Säulenanschlußteil und ggf. Radhausanschlußteile aufweisen.

8. Tragstruktur nach einem der Ansprüche 1 bis 7,
**dadurch gekennzeichnet, daß**
die Basisknotenelemente (1) integrierte, dünnwandige Wandbereiche wenigstens als partielle Radhauswandbereiche aufweisen.

9. Tragstruktur nach einem der Ansprüche 1 bis 8,
**dadurch gekennzeichnet, daß**
die Tragstruktur Leichtmetall-Gußknoten als Basisknotenelemente (1) umfaßt.

10. Tragstruktur nach Anspruch 9,
**dadurch gekennzeichnet, daß**
insbesondere die dünnwandigen Basisknotenelemente (1) durch ein Niederdruckgießverfahren hergestellt sind, wobei in einer bis angenähert an die Schmelztemperatur des Leichtmetalls aufgeheizten Gießform das Erstarren der Schmelze durch gesteuertes Abkühlen zeitlich verzögert dergestalt geführt ist, daß Erstarrungsfronten von am weitest voneinander entfernt liegenden Gußkörperenden langsam zur Gußkörpermitte hin wandern.

11. Tragstruktur nach einem der Ansprüche 1 bis 10,
**dadurch gekennzeichnet, daß**
die Tragstruktur Kunststoffknoten als Basisknotenelemente umfaßt.

12. Tragstruktur nach Anspruch 11,
**dadurch gekennzeichnet, daß**
die Kunststoffknoten zumindest teilweise aus einem thermoplastischen Kunststoff bestehen.

13. Tragstruktur nach einem der Ansprüche 11 oder 12,
**dadurch gekennzeichnet, daß**
die Kunststoffknoten zumindest teilweise aus einem faserverstärkten Kunststoff bestehen.

14. Tragstruktur nach einem der Ansprüche 11 bis 13,
**dadurch gekennzeichnet, daß**
die Kunststoffknoten zumindest teilweise im Spritzgießverfahren hergestellt sind.

15. Tragstruktur nach einem der Ansprüche 1 bis 14,
**dadurch gekennzeichnet, daß**
die Tragstruktur Leichtmetall-Strangprofile umfaßt.

16. Tragstruktur nach einem der Ansprüche 1 bis 15,
**dadurch gekennzeichnet, daß**
die Tragstruktur Kunststoffprofile umfaßt.

## Claims

1. Carrying structure of a motor vehicle, consisting of light-metal cast nodes and/or plastic nodes (1) and of light-metal extruded profiles and/or plastic profiles (3, 7, 12, 15, 21) connecting these, there being provided as light-metal cast nodes and/or plastic nodes at least four large-volume one-piece basic nodal elements (1), of which in each case two are arranged laterally opposite one another in the region of the front body and in each case two are arranged laterally opposite one another in the region of the rear body, and, via integrally formed connection parts (4, 6, 11, 16), the four basic nodal elements (1) being plugged together with and connected to light-metal extruded profiles and/or plastic profiles (3, 7, 12, 15, 21) as connecting members, so as to form a basic frame, **characterized in that** the front-body basic nodal elements (1) have in each case an integrated lower longitudinal-member piece (2), a spring-strut dome (17) and holding points (18, 19) for the front axle and in each case an integrated curved member connection (5) from the lower longitudinal-member piece (2) to an integrally formed sill connection (6).

2. Carrying structure according to Claim 1, **characterized in that** the in each case one-piece basic nodal elements (1) have, integrated, member parts (2, 5, 9, 13) and/or wall parts (23) and/or reinforcing ribs (22) and connection parts (4, 6, 11, 16) for connecting members (3, 7, 12, 15) and/or functional parts.

3. Carrying structure according to Claim 1 or Claim 2, **characterized in that** the basic nodal elements (1) have a thin-walled design at least in substantial regions.

4. Carrying structure according to one of Claims 1 to 3, **characterized in that** the front-body basic nodal elements (1) have in each case an integrated vertical member (9), preferably adjoining the region of the sill connection part (6), with an upper A-pillar connection part (11), which has adjoining it, moreover, an integrated upper longitudinal-member piece (13) which, to form a spring-strut dome (17), may contain, if appropriate, an approximately horizontally lying U-shaped portion (8).

5. Carrying structure according to one of Claims 1 to 4, **characterized in that**, moreover, connection parts and holding devices for members and functional elements are integrally formed, in particular laterally for the fastening of cross member profiles (20, 21, 24) in the tunnel region and cowl region, which, if appropriate, may carry, in a similar way to an auxiliary frame, a steering gear, rocker post and assemblies for power-assisted steering, and for the fastening of transmission bearings and/or anti-lock units and/or engine bearings.

6. Carrying structure according to one of Claims 1 to 5, **characterized in that** the rear-body basic nodal elements have in each case an integrated lower longitudinal-member piece, a spring-strut dome and holding points for the rear axle.

7. Carrying structure according to Claim 6, **characterized in that** the rear-body basic nodal elements have in each case at least on sill connection part, a C-pillar connection part and, if appropriate, wheel-arch connection parts.

8. Carrying structure according to one of Claims 1 to 7, **characterized in that** the basic nodal elements (1) have integrated thin-walled wall regions at least as partial wheel-arch wall regions.

9. Carrying structure according to one of Claims 1 to 8, **characterized in that** the carrying structure comprises light-metal cast nodes as basic nodal elements (1).

10. Carrying structure according to Claim 9, **characterized in that**, in particular, the thin-walled basic nodal elements (1) are produced by means of a low-pressure casting method, in which case, in a casting mould heated approximately to the fusion temperature of the light metal, the solidification of the melt by a controlled cooling is managed with a time delay, in such a way that solidification fronts of cast-body ends lying furthest away from one another creep slowly towards the cast-body centre.

11. Carrying structure according to one of Claims 1 to 10, **characterized in that** the carrying structure comprises plastic nodes as basic nodal elements.

12. Carrying structure according to Claim 11, **characterized in that** the plastic nodes consist at least partially of a thermoplastic.

13. Carrying structure according to one of Claims 11 or 12, **characterized in that** the plastic nodes consist at last partially of a fibre-reinforced plastic.

14. Carrying structure according to one of Claims 11 to 13, **characterized in that** the plastic nodes are produced at least partially by the injection-moulding method.

15. Carrying structure according to one of Claims 1 to 14, **characterized in that** the carrying structure comprises light-metal extruded profiles.

16. Carrying structure according to one of Claims 1 to 15, **characterized in that** the carrying structure comprises plastic profiles.

## Revendications

1. Structure de support pour véhicule automobile, se composant de noeuds coulés en métal léger et/ou de noeuds en plastique (1) et de profilés extrudés en métal léger et/ou de profilés en plastique (3, 7, 12, 15, 21) reliant ceux-ci, au moins quatre éléments de noeuds de base (1) de grand volume, formés d'une pièce, étant prévus en tant que noeuds coulés en métal léger et/ou noeuds en plastique, dont à chaque fois deux sont disposés latéralement en regard dans la région de la partie avant du véhicule et à chaque fois deux sont disposés latéralement en regard dans la région de la partie arrière du véhicule, et les quatre éléments de noeuds de base (1) étant assemblés et reliés par le biais de pièces de raccordement façonnées (4, 6, 11, 16) à des profilés extrudés en métal léger et/ou des profilés en plastique (3, 7, 12, 15, 21) servant de support de connexion pour former un cadre de base,
**caractérisée en ce que**
les éléments de noeuds de base (1) de la partie avant du véhicule présentent à chaque fois une pièce de support longitudinale (2) inférieure intégrée, une coupelle de jambe de force à ressort (17) et des points de fixation (18, 19) pour l'essieu avant ainsi qu'à chaque fois une connexion de support cintrée intégrée (5) de la pièce de support longitudinale (2) inférieure jusqu'à un raccordement de bas de marche (6) façonné.

2. Structure de support selon la revendication 1,
**caractérisée en ce que**
les éléments de noeuds de base (1) d'une seule pièce présentent à chaque fois des pièces de support intégrées (2, 5, 9, 13) et/ou des pièces de paroi (23) et/ou des nervures de renforcement (22) et des pièces de raccordement (4, 6, 11, 16) pour des supports de connexion (3, 7, 12, 15) et/ou des pièces fonctionnelles.

3. Structure de support selon la revendication 1 ou la revendication 2,
**caractérisée en ce que**
les éléments de noeuds de base (1) sont réalisés au moins avec des parois minces dans des régions importantes.

4. Structure de support selon l'une quelconque des revendications 1 à 3,
**caractérisée en ce que**
les éléments de noeuds de base (1) de la partie avant du véhicule présentent à chaque fois un support vertical intégré (9), de préférence se raccordant à la région de la pièce de raccordement de bas de marche (6), avec une pièce de raccordement de la colonne A supérieure (11), où en outre une pièce de support longitudinale supérieure intégrée (13) se raccorde, laquelle peut contenir, pour la formation d'une coupelle pour jambe de force à ressort (17), éventuellement une pièce partielle (8) en forme de U en position horizontale.

5. Structure de support selon l'une quelconque des revendications 1 à 4,
**caractérisée en ce que**
en outre des pièces de raccordement et des fixations sont façonnées pour les supports et les éléments fonctionnels, en particulier latéralement pour la fixation de profilés de support transversaux (20, 21, 24) dans la région du tunnel et du tablier, qui peuvent éventuellement porter, de manière similaire à un cadre auxiliaire, des mécanismes de direction, des supports pendulaires et des unités de direction assistée, et pour la fixation de paliers de transmission et/ou de dispositifs d'antiblocage et/ou de paliers de moteur.

6. Structure de support selon l'une quelconque des revendications 1 à 5,
**caractérisée en ce que**
les éléments de noeuds de base de la partie arrière du véhicule présentent à chaque fois une pièce de support longitudinale inférieure intégrée, une coupelle pour jambe de force à ressort et des points de fixation pour l'essieu arrière.

7. Structure de support selon la revendication 6,
**caractérisée en ce que**
les éléments de noeuds de base pour la partie arrière du véhicule présentent à chaque fois au moins une pièce de raccordement de bas de marche, une pièce de raccordement de colonne C et éventuellement des pièces de raccordement de passage de roue.

8. Structure de support selon l'une quelconque des revendications 1 à 7,
**caractérisée en ce que**
les éléments de noeuds de base (1) présentent des régions de paroi à parois minces, intégrées, au moins en tant que régions de paroi de passage de roue partielles.

9. Structure de support selon l'une quelconque des revendications 1 à 8,
**caractérisée en ce que**
la structure de support comprend des noeuds coulés en métal léger en tant qu'éléments de noeuds de base (1).

10. Structure de support selon la revendication 9,
**caractérisée en ce que**
en particulier les éléments de noeuds de base (1) à parois minces sont fabriqués par un procédé de coulage sous basse pression, la solidification de la masse fondue étant réalisée dans un moule de coulée chauffé jusqu'à pratiquement la température de fusion du métal léger, par refroidissement contrôlé de manière retardée dans le temps de telle sorte que les fronts de solidification s'avancent lentement vers le centre du corps de coulée depuis les extrémités du corps de coulée les plus éloignées les unes des autres.

11. Structure de support selon l'une quelconque des revendications 1 à 10,
**caractérisée en ce que**
la structure de support comprend des noeuds en plastique en tant qu'éléments de noeuds de base.

12. Structure de support selon la revendication 11,
**caractérisée en ce que**
les noeuds en plastique se composent au moins partiellement d'un plastique thermoplastique.

13. Structure de support selon l'une quelconque des revendications 11 ou 12,
**caractérisée en ce que**
les noeuds en plastique se composent au moins partiellement d'un plastique renforcé par des fibres.

14. Structure de support selon l'une quelconque des revendications 11 à 13,
**caractérisée en ce que**
les noeuds en plastique sont fabriqués au moins partiellement par un procédé de coulage par injection.

15. Structure de support selon l'une quelconque des revendications 1 à 14,
**caractérisée en ce que**
la structure de support comprend des profilés extrudés en métal léger.

16. Structure de support selon l'une quelconque des revendications 1 à 15,
**caractérisée en ce que**
la structure de support comprend des profilés en plastique.
